# EUROPÄISCHE PATENTANMELDUNG

(11) **EP 2 675 104 A2**
(43) Veröffentlichungstag der Anmeldung: **18.12.2013**
(21) Anmeldenummer: 13002906.9
(22) Anmeldetag: 05.06.2013
(51) Int. Cl.: H04L 9/00

(54) **Gegen Safe Error Angriffe geschützte kryptographische Berechnung**

(30) Priorität: 13.06.2012 DE 102012011730
(71) Anmelder: Giesecke & Devrient GmbH, 81677 München (DE)
(72) Erfinder: Bauer, Sven, Dr., 85591 Vaterstetten (DE); Bockes, Markus, Dr., 81927 München (DE); Lamla, Michael, 80638 München (DE)

(57) **Zusammenfassung**

Die Erfindung lehrt ein Verfahren, in einem Prozessor (P), zum Durchführen einer kryptographischen Berechnung (DES, AES) unter Verwendung eines kryptographischen Schlüssels (K), wobei zur Durchführung der Berechnung der Schlüssel (K) in einem Schlüsselregister (R) bereitgestellt wird; und wobei über den im Schlüsselregister (R) bereitgestellten Schlüssel (K) oder zumindest über einen Teilschlüssel (SK) des bereitgestellten Schlüssels (K) eine fehlerkorrigierende Prüfsumme (CRC) berechnet wird; der Schlüssel (K) oder zumindest Teilschlüssel (SK) unter Berücksichtigung der fehlerkorrigierenden Prüfsumme (CRC) korrigiert und dem Prozessor (P) zugeführt wird; und die Berechnung mit dem korrigierten Schlüssel (K) oder zumindest Teilschlüssel (SK) durchgeführt wird.

## Beschreibung

Die Erfindung betrifft ein gegen Safe Error Angriffe geschütztes Verfahren zum Durchführen einer kryptographischen Berechnung.

Kryptographische Berechnungen werden von einem Prozessor durchgeführt, z.B. von einem allgemeinen Prozessor (CPU), oder von einem Krypto-Coprozessor, der einem allgemeinen Prozessor zugeordnet ist. Der geheime Schlüssel für eine durch den Prozessor (allgemeinen Prozessor oder Krypto-Coprozessor) auszuführende Berechnung wird in einem dem Prozessor zugeordneten Schlüsselregister bereitgehalten. Insbesondere Chipkarten, z.B. für Zahlungsverkehr- oder Mobilfunkanwendungen, haben häufig Prozessoren mit Krypto-Coprozessoren. Viele Chipkarten, insbesondere solche für Zahlungsverkehr- oder Mobilfunkanwendungen, haben speziell für die Algorithmen DES oder AES (s.u.) ausgelegte Krypto-Coprozessoren.

Durch eine kryptographische Berechnung werden Eingangsdaten unter Verwendung eines geheimen Schlüssels zu Ausgangsdaten verarbeitet, z.B. Klartextdaten mit einem Schlüssel zu Chiffredaten verschlüsselt oder umgekehrt Chiffredaten mit einem Schlüssel zu Klartextdaten entschlüsselt. Beispiele für symmetrische (Verschlüsselungs-Schlüssel = Entschlüsselungs-Schlüssel) kryptographische Berechnungen sind die Algorithmen DES (Data Encryption Standard) und AES (Advanced Encryption Standard).

Bei Algorithmen, die mehrere Runden (Teilberechnungen) umfassen, z.B. DES, AES, werden die Eingangsdaten in Teildaten und der Schlüssel in Teilschlüssel (Subkeys) zerlegt und in jeder Runde Teildaten mit einem Teilschlüssel (Subkeys) verarbeitet (verschlüsselt oder entschlüsselt). Zu Beginn des Algorithmus wird der komplette Schlüssel als Originalschlüssel in ein Schlüsselregister geladen. Zu Beginn jeder Runde wird durch einen Teilschlüsselgenerator (Subkey-Generator) ein Teilschlüssel (Subkey) für die jeweilige Runde abgeleitet. Der Teilschlüssel einer aktuellen Runde wird entweder aus dem Originalschlüssel oder aus dem Teilschlüssel der vorangehenden Runde abgeleitet. Der Teilschlüssel der aktuellen Runde wird in ein Teilregister (Subkey-Register) geladen, während der Durchführung der Runde im Teilregister (Subkey-Register) gehalten und nach der Runde gelöscht oder mit dem Teilschlüssel/ Subkey für die nächste Runde überschrieben. Das Teilregister kann identisch sein mit dem Schlüsselregister, in das zu Beginn des Algorithmus der Originalschlüssel geladen wurde, so dass für den Algorithmus nur ein einziges Schlüsselregister benötigt wird und ggf. verwendet wird. Der Schlüssel im Schlüsselregister wird dabei vor Beginn jeder Runde neu überschrieben, und insbesondere wird vor Beginn der ersten Runde der Originalschlüssel überschrieben.

Der in einer kryptographischen Berechnung verarbeitete kryptographische Schlüssel soll geheim bleiben. Mittels DFA-Angriffen (DFA = Differential Fault Analysis) werden gezielt Fehler in die Berechnung injiziert. Aus der resultierenden Störung des Rechenergebnisses der Berechnung wird auf den Schlüssel geschlossen.

Eine Spezialform von DFA-Angriffen bilden die Safe Error Angriffe, bei denen ein Angreifer gezielt nacheinander einzelne Schlüsselbits eines in einem Schlüsselregister für eine Berechnung abgelegten Schlüssels manipuliert und aus der resultierenden Beeinflussung des Rechenergebnisses den Schlüssel Bit für Bit rekonstruiert. Als Störung kann beispielsweise ein gezielter Lichtblitz oder Strompuls an einem gezielt ausgewählten Ort auf dem Chip, in dem der Prozessor bzw. das Schlüsselregister implementiert ist, vorgesehen sein. Der Schlüssel liegt in Binärform vor, d.h. als Abfolge von Bits mit Wert 1 oder 0. Der Angreifer führt, um den Wert eines einzelnen Schlüsselbits zu ermitteln, zwei Berechnungen durch, eine ungestörte, und eine, bei der das einzelne Schlüsselbit selektiv gestört wird, und vergleicht die Rechenergebnisse von ungestörter und gestörter Berechnung. Der Angreifer kann, je nach Details des rechnenden Prozessors, entweder wissen oder selbst festlegen, in welche Richtung gestörte Bits kippen, nach 1 oder nach 0, also auf welchen Wert, 1 oder 0, durch eine Störung Bits gesetzt werden. Führt das Stören eines Bits beispielsweise dazu, dass sich bei dem Bit der Wert Null einstellt, und die Rechenergebnisse von ungestörter und gestörter Berechnung sind gleich, dann hatte das ungestörte Bit von vornherein bereits den Wert Null. Der ausgespähte Bitwert ist Null. Unterscheiden sich dagegen die Rechenergebnisse von ungestörter und gestörter Berechnung, so wurde im ungestörten Fall mit Bitwert Eins gerechnet, im gestörten Fall mit Bitwert Null, und das ungestörte Bit hatte den Wert Eins. Der ausgespähte Bitwert ist Eins.

Auf dem Gebiet der Datenverarbeitung und -übertragung sind fehlerkorrigierende Prüfsummen bekannt. Dabei wird zu verarbeitenden oder zu übertragenden Daten redundante Information beigefügt, die es ermöglicht, Fehler, die bei der Verarbeitung bzw. Übertragung der Daten auftreten, zu erkennen und zu korrigieren. Insbesondere beim Abspielen von CDs (Compact Discs) und DVDs (Digital Versatile Discs) ist die Fehlerkorrektur mit fehlerkorrigierenden Prüfsummen bekannt, um Information, die z.B. auf Grund von Erschütterungen fehlerhaft ausgelesen worden ist, mittels der fehlerkorrigierenden Prüfsumme berichtigt wiederzugeben.

Der Erfindung liegt die Aufgabe zu Grunde, ein gegen Safe Error Angriffe geschütztes Verfahren zum Durchführen einer kryptographischen Berechnung zu schaffen.

Die Aufgabe wird gelöst durch ein Verfahren nach Anspruch 1. Vorteilhafte Ausgestaltungen der Erfindung sind in den abhängigen Ansprüchen angegeben.

Das Verfahren nach Anspruch 1 wird in einem Prozessor durchgeführt, z.B. einem allgemeinen Prozessor (CPU) oder einem Krypto-Coprozessor, der wiederum einem allgemeinen Prozessor (CPU) zugeordnet sein kann. Das Verfahren ist zum Durchführen einer kryptographischen Berechnung (z.B. DES oder AES oder eines anderen Algorithmus) unter Verwendung eines kryptographischen Schlüssels eingerichtet. Zur Durchführung der Berechnung wird der Schlüssel in einem Schlüsselregister bereitgestellt. Das Verfahren zeichnet sich dadurch aus, dass über den im Schlüsselregister bereitgestellten Schlüssel oder zumindest über einen Teilschlüssel des bereitgestellten Schlüssels eine fehlerkorrigierende Prüfsumme berechnet wird, dass der Schlüssel oder zumindest Teilschlüssel unter Berücksichtigung der fehlerkorrigierenden Prüfsumme korrigiert und dem Prozessor zugeführt wird, und dass die Berechnung mit dem korrigierten Schlüssel oder zumindest Teilschlüssel durchgeführt wird.

Der Schlüssel oder Teilschlüssel wird also derart unter Berücksichtigung der fehlerkorrigierenden Prüfsumme korrigiert, dass Fehler, die im im Schlüsselregister bereitgestellten Schlüssel vorhanden sind, im dem Prozessor zugeführten Schlüssel oder Teilschlüssel korrigiert sind.

Führt ein Angreifer einen Safe Error Angriff an einem ausgesuchten Schlüsselbit am Schlüsselregister durch, kann er das ausgesuchte Schlüsselbit im Schlüsselregister manipulieren. Durch die fehlerkorrigierende Prüfsumme wird die Manipulation erkannt und korrigiert. Durch die Berücksichtigung der fehlerkorrigierenden Prüfsumme, wenn der Schlüssel oder zumindest Teilschlüssel der Berechnung zugeführt wird, wird der Effekt der Manipulation aufgehoben, und das ungestörte Schlüsselbit fließt in die Berechnung ein. Die Manipulation hat somit keinerlei Einfluss auf das Rechenergebnis der kryptographischen Berechnung. Der Safe Error Angriff läuft ins Leere. Damit kann der Angreifer keine Rückschlüsse aus der Manipulation auf den verarbeiteten Schlüssel ziehen.

Daher ist gemäß Anspruch 1 ein gegen Safe Error Angriffe geschütztes Verfahren zum Durchführen einer kryptographischen Berechnung geschaffen.

Wahlweise ist als Berechnung eine Runde eines mehrrundigen kryptographischen Verfahrens vorgesehen, z.B. DES, AES oder ein anderer Algorithmus. Als korrigierter Schlüssel, der dem Prozessor zugeführt wird, ist dabei ein aus dem im Schlüsselregister bereitgestellten Schlüssel abgeleiteter Teilschlüssel der aktuellen Runde vorgesehen. D.h., wenn aus einem im Schlüsselregister bereitstehenden Schlüssel ein Teilschlüssel für die aktuelle Runde des kryptographischen Verfahrens abgeleitet wird, werden Fehler, die im Schlüssel ggf. vorhanden sind, mittels der fehlerkorrigierenden Prüfsumme korrigiert, so dass der abgeleitete Teilschlüssel der aktuellen Runde fehlerfrei ist. Die Runde wird mit dem so gewonnen korrigierten Teilschlüssel (Rundenschlüssel) gerechnet. Ein Safe Error Angriff, der den Fehler erzeugt hat, läuft ins Leere.

Wahlweise ist als im Schlüsselregister bereitgestellter Schlüssel ein zu Beginn der kryptographischen Berechnung bereitgestellter Schlüssel vorgesehen, d.h. der Originalschlüssel, der am Eingang des Algorithmus eingegeben wird. Aus dem Originalschlüssel wird vorzugsweise der Teilschlüssel der aktuellen Runde abgeleitet. Fehler im Originalschlüssel, erzeugt z.B. durch DFA Angriffe auf das Schlüsselregister, werden beim Ableiten des Teilschlüssels aus dem Originalschlüssel durch die fehlerkorrigierende Prüfsumme korrigiert.

Wahlweise ist als Berechnung eine Runde eines mehrrundigen kryptographischen Verfahrens vorgesehen, und als im Schlüsselregister bereitgestellter Schlüssel ist ein Teilschlüssel der vorherigen Runde vorgesehen. In diesem Fall werden, wenn aus dem im Schlüsselregister bereitstehenden Teilschlüssel der vorherigen Runde der Teilschlüssel der aktuellen Runde abgeleitet wird, im Teilschlüssel der vorherigen Runde im Schlüsselregister vorhandene Fehler mittels der fehlerkorrigierenden Prüfsumme korrigiert. Selbst wenn ein Teilschlüssel der vorangehenden Runde im Schlüsselregister manipuliert worden ist, wird in der aktuellen Runde die Berechnung mit dem fehlerfreien Teilschlüssel der aktuellen Runde durchgeführt. Somit sind durch die Erfindung auch Safe Error Angriffe auf Teilschlüssel, die im Verlauf der Berechnung im oder in einem Schlüsselregister liegen, entkräftet.

Eine erfindungsgemäße Prozessoranordnung hat einen Prozessor, ein dem Prozessor zugeordnetes Schlüsselregister, und einen Schlüsselgenerator oder Teilschlüsselgenerator, durch den aus einem im Schlüsselregister bereitgestellten Schlüssel ein Schlüssel oder Teilschlüssel ableitbar und dem Prozessor zuführbar ist.

Die Prozessoranordnung zeichnet sich aus durch eine Prüfsummeneinrichtung, durch die eine fehlerkorrigierende Prüfsumme über einen im Schlüsselregister bereitgestellten Schlüssel oder zumindest über einen Teilschlüssel des bereitgestellten Schlüssels bildbar ist, und durch eine zwischen das Schlüsselregister und den Prozessor gekoppelte Korrektureinrichtung, durch welche der Schlüssel oder zumindest Teilschlüssel unter Berücksichtigung der fehlerkorrigierenden Prüfsumme korrigierbar und der korrigierte Schlüssel oder zumindest Teilschlüssel dem Prozessor zuführbar ist.

Wahlweise wird die Prüfsumme über den gesamten im Schlüsselregister liegenden Schlüssel gebildet, und wahlweise der nur ein aus dem Schlüssel abgeleiteter Teilschlüssel korrigiert. Alternativ wird die Prüfsumme über den Teilschlüssel im Schlüssel gebildet und der Teilschlüssel korrigiert.

Wahlweise hat die Prozessoranordnung ein einziges Schlüsselregister, alternativ mehrere, zumindest zwei, Schlüsselregister, beispielsweise unterschiedliche Schlüsselregister für Originalschlüssel und Teilschlüssel, z.B. Teilschlüssel von Runden eines mehrrundigen Verfahrens.

Wahlweise ist die Korrektureinrichtung dazu eingerichtet, eine Ausgabe zu erzeugen, die als Eingabe in den Schlüsselgenerator oder Teilschlüsselgenerator eingebbar ist. Alternativ ist die Korrektureinrichtung in den Schlüsselgenerator oder Teilschlüsselgenerator integriert.

Im Folgenden wird die Erfindung an Hand von Ausführungsbeispielen und unter Bezugnahme auf die Zeichnung näher erläutert, in der zeigen:
- Fig.1: die Ableitung eines Teilschlüssels (Subkeys) aus einem Schlüssel nach dem Stand der Technik;
- Fig. 2: die Ableitung eines Teilschlüssels (Subkeys) aus einem Schlüssel nach einer Ausführungsform der Erfindung.

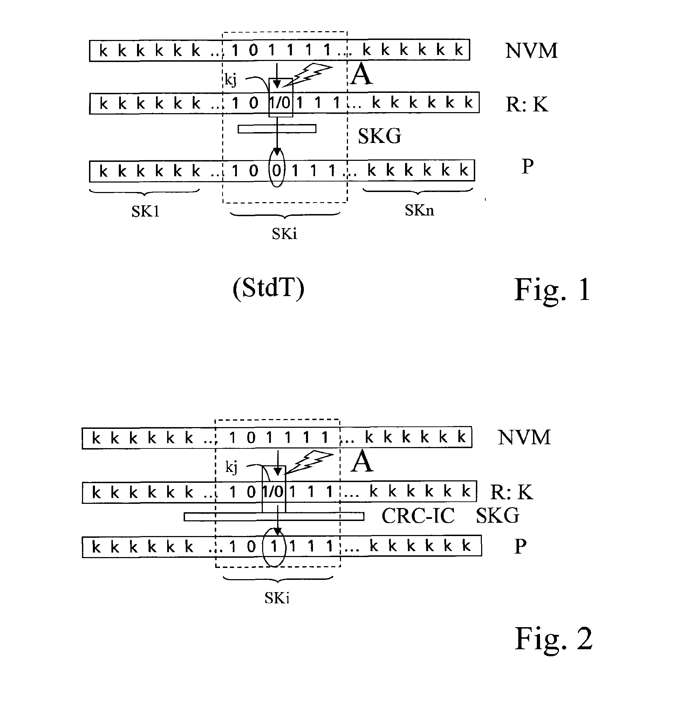

Fig. 1 zeigt, in schematisierter Darstellung, die Ableitung eines Teilschlüssels SKi für die Runde i von Runden 1, ... i, ... n des AES oder DES aus einem kryptographischen Schlüssel K nach dem Stand der Technik. Die zu Grunde liegende Rechenanordnung umfasst einen für DES oder AES eingerichteten oder zumindest geeigneten Prozessor P, einen für den Prozessor P zugänglichen nichtflüchtigen Speicher NVM, ein für den Prozessor P zugängliches Schlüsselregister R und einen Teilschlüsselgenerator (Subkey-Generator) SKG, mit dem aus einem im Schlüsselregister R liegenden Schlüssel K Teilschlüssel SK1, ... SKi, ... SKn (Subkeys, Rundenschlüssel) für die Runden 1, ... i, ... n des DES bzw. AES ableitbar sind. Der Schlüssel K besteht aus einer Mehrzahl von binären Schlüsselbits k.

Der Schlüssel (Originalschlüssel) K ist im nichtflüchtigen Speicher NVM gesichert dauerhaft abgespeichert und wird zu Beginn des DES/ AES in das Schlüsselregister R geladen. Zu Beginn jeder Runde i des AES bzw. DES wird durch den Teilschlüsselgenerator SKG aus dem im Schlüsselregister R liegenden Schlüssel K der Teilschlüssel SKi (Subkeys, Rundenschlüssel) der jeweiligen Runde i abgeleitet und dem Prozessor P zugeführt. Die Berechung der jeweiligen Runde i wird mit dem jeweiligen Teilschlüssel SKi durch den Prozessor P durchgeführt.

Gemäß dem Stand der Technik werden die Schlüsselbits k für den Teilschlüssel SKi so, wie sie im Schlüsselregister R auftreten, an den Prozessor P zur Durchführung der Berechnung bereitgestellt. Der Teilschlüssel SKi der Runde i in Fig.1 besteht aus der Bitfolge 101111. Durch einen Safe Error Angriff A wird das im Schlüsselregister R liegende Teilschlüsselbit kj vom Wert 1 auf dem Wert 0 gekippt. Dem Prozessor P wird für die Berechnung der Runde i das Schlüsselbit kj mit dem gekippten Wert 0 zugeführt. Der Safe Error Angriff (Bitkippen) auf das Schlüsselregister R überträgt sich somit unmittelbar auf die Berechnung.

Fig. 2 zeigt die Ableitung eines Teilschlüssels (Subkeys) SKi aus einem Schlüssel K nach einer Ausführungsform der Erfindung. Der Schlüssel K wird aus dem nichtflüchtigen Speicher NVM in das Schlüsselregister R übertragen. Auf den im Schlüsselregister R liegenden Schlüssel K wird ein Safe Error Angriff A durchgeführt, durch den das Bit kj des Teilschlüssels SKi der Runde i von 1 auf 0 gekippt wird. Im Unterschied zum Stand der Technik wird über die Schlüsselbits k des Schlüssels K im Schlüsselregister R, oder zumindest über die Bits des Teilschlüssels SKi der gerade begonnenen Runde, eine fehlerkorrigierende Prüfsumme CRC berechnet. Der Teilschlüssel/ Subkey SKi für die Runde i wird durch den herkömmlichen Subkey-Generator SKG in Verbindung mit einer Korrektureinrichtung CRC-IC abgeleitet. Mittels der Korrektureinrichtung CRC-IC wird bei der Ableitung des Teilschlüssels SKi die fehlerkorrigierende Prüfsumme CRC berücksichtigt. Hierdurch wird durch den Einfluss der Korrektureinrichtung CRC-IC das gekippte Bit kj, das im Schlüsselregister R durch den Safe Error Angriff A von 1 auf 0 gekippt ist, korrigiert und mit dem ursprünglichen Wert 1 dem Prozessor P zugeführt. Der Prozessor P führt die Berechnung der Runde i mit dem korrigierten Teilschlüssel SKi durch.

Gemäß den Figuren ist im Schlüsselregister der Originalschlüssel K abgelegt. Der Teilschlüssel SKi der Runde i wird aus dem Originalschlüssel K abgeleitet. Gemäß alternativen Ausführungsformen ist zu Beginn der Runde i im Schlüsselregister R ein Teilschlüssel SKi-1 der vorangehenden Runde i-1 abgelegt. Dabei wird der Teilschlüssel SKi der aktuellen Runde i aus dem Teilschlüssel SKi-1 der vorangehenden Runde i-1 abgeleitet und dabei durch eine fehlerkorrigierende Prüfsumme, z.B. einen CRC, korrigiert.

## Patentansprüche

1. Verfahren, in einem Prozessor (P), zum Durchführen einer kryptographischen Berechnung (DES, AES) unter Verwendung eines kryptographischen Schlüssels (K), wobei zur Durchführung der Berechnung der Schlüssel (K) in einem Schlüsselregister (R) bereitgestellt wird,
**dadurch gekennzeichnet, dass**
- über den im Schlüsselregister (R) bereitgestellten Schlüssel (K) oder zumindest über einen Teilschlüssel (SK) des bereitgestellten Schlüssels (K) eine fehlerkorrigierende Prüfsumme (CRC) berechnet wird,
- der Schlüssel (K) oder zumindest Teilschlüssel (SK) unter Berücksichtigung der fehlerkorrigierenden Prüfsumme (CRC) korrigiert und dem Prozessor (P) zugeführt wird, und
- die Berechnung mit dem korrigierten Schlüssel (K) oder zumindest Teilschlüssel (SK) durchgeführt wird.

2. Verfahren nach Anspruch 1, wobei als Berechnung eine Runde eines mehrrundigen kryptographischen Verfahrens (DES, AES) vorgesehen ist und als korrigierter Schlüssel (SK), der dem Prozessor (P) zugeführt wird, ein aus dem im Schlüsselregister (R) bereitgestellten Schlüssel (K; SK) abgeleiteter Teilschlüssel (SK) der aktuellen Runde vorgesehen ist.

3. Verfahren nach Anspruch 1 oder 2, wobei als im Schlüsselregister (R) bereitgestellter Schlüssel (K) ein zu Beginn der kryptographischen Berechnung (DES, AES) bereitgestellter Schlüssel (K) vorgesehen ist.

4. Verfahren nach Anspruch 1 oder 2, wobei als Berechnung eine Runde eines mehrrundigen kryptographischen Verfahrens (DES, AES) vorgesehen ist und als im Schlüsselregister (R) bereitgestellter Schlüssel ein Teilschlüssel (SK) der vorherigen Runde vorgesehen ist.

5. Prozessoranordnung mit einem Prozessor (P), einem dem Prozessor (P) zugeordneten Schlüsselregister (R) und einem Schlüsselgenerator oder Teilschlüsselgenerator (SKG), durch den aus einem im Schlüsselregister (R) bereitgestellten Schlüssel (K) ein Schlüssel (K) oder Teilschlüssel (SK) ableitbar und dem Prozessor (P) zuführbar ist,
**gekennzeichnet durch**
- eine Prüfsummeneinrichtung, **durch** die eine fehlerkorrigierende Prüfsumme (CRC) über einen im Schlüsselregister (R) bereitgestellten Schlüssel (K) oder zumindest über einen Teilschlüssel (SK) des bereitgestellten Schlüssels (K) bildbar ist, und
- eine zwischen das Schlüsselregister (R) und den Prozessor (P) gekoppelte Korrektureinrichtung (CRC-IC), **durch** welche der Schlüssel (K) oder zumindest Teilschlüssel (SK) unter Berücksichtigung der fehlerkorrigierenden Prüfsumme (CRC) korrigierbar und der korrigierte Schlüssel (K) oder zumindest Teilschlüssel (SK) dem Prozessor (P) zuführbar ist.

6. Prozessoranordnung nach Anspruch 5, weiter eingerichtet für ein Verfahren nach einem der Ansprüche 1 bis 4.

7. Prozessoranordnung nach Anspruch 5 oder 6, wobei die Korrektureinrichtung (CRC-IC) dazu eingerichtet ist, eine Ausgabe zu erzeugen, die als Eingabe in den Schlüsselgenerator oder Teilschlüsselgenerator (SKG) eingebbar ist, oder wobei die Korrektureinrichtung (CRC-IC) in den Schlüsselgenerator oder Teilschlüsselgenerator (SKG) integriert ist.
